# EUROPEAN PATENT APPLICATION

(11) **EP 1 944 575 A1**
(43) Date of publication of application: **16.07.2008**
(21) Application number: 06811478.4
(22) Date of filing: 10.10.2006
(51) Int. Cl.: G01C 19/56, G01P 9/04, H04N 5/225, H04N 5/232, H04N 101/00

(54) **VIBRATION-TYPE INERTIA FORCE SENSOR AND ELECTRONIC APPARATUS USING THE SAME**

(30) Priority: 11.10.2005 JP 2005296280; 11.10.2005 JP 2005296281; 11.10.2005 JP 2005296282
(71) Applicant: MATSUSHITA ELECTRIC INDUSTRIAL CO., LTD., Osaka 571-8501 (JP)
(72) Inventor: UEMURA, Takeshi Matsushita Electric Co.Ltd, IPOC, Osaka, 540-6207 (JP)
(74) Representative: Pautex Schneider, Nicole Véronique
(86) International application number: PCT/JP2006/320165
(87) International publication number: WO 2007/043504

(57) **Abstract**

A vibration-type inertia force sensor includes: an oscillator; a driving section for oscillating the oscillator; a sensing section for sensing a strain caused in the oscillator due to an inertia force; and a power supply section for supplying power to the driving section and the sensing section in a normal state and for supplying power to one of the driving section and the sensing section and not supplying power to the other of the driving section and the sensing section in a power-saving state.

## Description

### TECHNICAL FIELD

The present invention relates to a vibration-type inertia force sensor used in various electronic devices and an electronic device using the same.

### BACKGROUND ART

First, a conventional vibration type inertia force sensor will be described. Vibration-type inertia force sensors include an angular speed sensor for example. This angular speed sensor includes: an oscillator; a driving circuit for oscillating this oscillator; a sensing circuit for sensing strain caused by Coriolis force (inertia force); and a power supply circuit for supplying power to the driving circuit and the sensing circuit.

The oscillators of the angular speed sensor include the tuning fork-like shape one, the H-like shape one, the T-like shape one or others having various shapes. The angular speed sensor calculates an angular speed by oscillating this oscillator to electrically detect the strain of the oscillator due to the generation of the Coriolis force (see Japanese Patent Unexamined Publication No. 2002-243451 for example).

A technique for using the angular speed sensor as described above as a component for realizing an image stabilizer function of a digital camera also has been suggested (see Japanese Patent Unexamined Publication No. 2004-77711 for example).

Generally, a digital camera is operated by driving a battery. Thus, a digital camera in which power consumption of a battery is increased has a shorter time during which the camera can be used. Due to this reason, a function has been adopted by which the minimum power supply to main functions is set when the camera is not used and power supply to other additional functions is blocked so that the power consumption of the battery can be saved and the camera can be used for a long time.

However, the angular speed sensor that realizes the image stabilizer function is always supplied with power. This has caused a problem where the suppression of power consumption is hindered.

### SUMMARY OF THE INVENTION

The present invention has been made in view of the above disadvantage. The present invention provides a vibration-type inertia force sensor that can reduce power consumption when being installed in an electronic device such as a digital camera and an electronic device using the same.

The vibration-type inertia force sensor of the present invention is characterized in including: an oscillator; a driving section for oscillating the oscillator; a sensing section for sensing a strain caused in the oscillator due to an inertia force; and a power supply section for supplying power to the driving section and the sensing section in a normal state and for supplying power to one of the driving section and the sensing section and not supplying power to the other of the driving section and the sensing section in a power-saving state.

According to the configuration as described above, power is supplied to the driving section and the sensing section in the normal state and power is supplied to only one of the driving section and the sensing section in the power-saving state. Thus, such a vibration-type inertia force sensor can be realized that can reduce power consumption when being installed in an electronic device such as a digital camera.

The power supply section also may supply power to the driving section state and does not supply power to the sensing section in the power-saving state.

According to the configuration as described above, no power is supplied to the sensing section for sensing the strain caused in the oscillator due to the inertia force in the power-saving state. Thus, power consumption can be reduced. On the other hand, power is supplied to the driving section in the power-saving state. This can reduce a return time required to resume the function of the vibration-type inertia force sensor when the normal state is retuned from the power-saving state.

A return section for returning the power supply section from the power-saving state to the normal state also may be provided.

According to the structure as described above, the power supply section also can be securely shifted from the power-saving state to the normal state.

The return section also may be structured to return the power supply section from the power-saving state to the normal state when there is an input of an external signal.

According to the structure as described above, in accordance with an input of an external signal due to a contact of a user with the device for example, power supply also can be appropriately shifted from the power-saving state to the normal state.

Alternatively, the power supply section also may be shifted from the normal state to the power-saving state when no strain is sensed by the sensing section.

According to the structure as described above, a shift from the normal state to the power-saving state also can be achieved when the user does not move the device.

Alternatively, the power supply section also can be shifted from the normal state to the power-saving state when no strain is sensed by the sensing section for a predetermined time.

According to the structure as described above, a shift from the normal state to the power-saving state also can be achieved when the user does not move the device for a predetermined time.

Next, the electronic device of the present invention is characterized in including the vibration-type inertia force sensor of the present invention.

According to the structure as described above, power is supplied to the driving section and the sensing section in the normal state and power is supplied to only one of the driving section and the sensing section in the power-saving state. This can realize an electronic device that can reduce power consumption.

Next, the electronic device of the present invention is characterized in including: an inertia force sensor having an oscillator, a driving section for oscillating the oscillator, and a sensing section for sensing a strain caused in the oscillator due to an inertia force; and a power supply section for supplying power to the driving section and the sensing section in a normal state and for supplying power to one of the driving section and the sensing section and not supplying power to the other of the driving section and the sensing section in a power-saving state.

According to the structure as described above, power is supplied to the driving section and the sensing section in the normal state and power is supplied to only one of the driving section and the sensing section in the power-saving state. This can realize an electronic device that can reduce power consumption.

The power supply section also may be configured to supply power to the driving section and to supply no power to the sensing section in the power-saving state.

According to the structure as described above, in the power-saving state, no power is supplied to the sensing section for sensing the strain cased in the oscillator due to the inertia force. This can reduce power consumption. In the power-saving state, power is supplied to the driving section. This can reduce a return time required to resume the function of the vibration-type inertia force sensor when the normal state is retuned from the power-saving state.

Alternatively, the power supply section also may be shifted from the power-saving state to the normal state when there is an input of an external signal.

According to the structure as described above, in accordance with the input of the external signal, power supply can be appropriately shifted from the power-saving state to the normal state.

The external signal also may be a signal when a user contacts the device.

According to the structure as described above, power supply also can be appropriately shifted from the power-saving state to the normal state when the user contacts a shutter button or a screw of a tripod for example.

Alternatively, the power supply section also may be shifted from the normal state to the power-saving state when no strain is sensed by the sensing section.

According to the structure as described above, a shift from the normal state to the power-saving state can be achieved when the user does not move the device.

Alternatively, the power supply section also may be shifted from the normal state to the power-saving state when no strain is sensed by the sensing section for a predetermined time.

According to the structure as described above, a shift from the normal state to the power-saving state also can be achieved when the user does not move the device for a predetermined time.

Alternatively, the power supply section also may be shifted from the normal state to the power-saving state when there is no input of an external signal for a predetermined time.

According to the structure as described above, a shift from the normal state to the power-saving state can be achieved by an input of an external signal.

Alternatively, the external signal also may be a signal that is caused when a user contacts the device.

According to the structure as described above, a shift from the normal state to the power-saving state also can be achieved when there is no contact of a user with the device (e.g., a shutter button, a screw of a tripod) for a predetermined time.

### BRIEF DESCRIPTION OF THE DRAWINGS

Fig. 1 is a block diagram illustrating the structure of an angular speed sensor in the first embodiment of the present invention.
Fig. 2 is a top view illustrating an oscillator of an oscillator of the angular speed sensor.
Fig. 3 is a perspective view illustrating a digital camera in which the angular speed sensor is installed.
Fig. 4 is a schematic view illustrating an electronic device in the second embodiment of the present invention.
Fig. 5 is a block diagram illustrating the structure of an inertia force sensor used in the electronic device.
Fig. 6 is a top view illustrating a sensor element used in the inertia force sensor.
Fig. 7 is a schematic view illustrating an electronic device in the third embodiment of the present invention.
Fig. 8 is a block diagram illustrating the structure of an inertia force sensor used in the electronic device.

### Reference marks in the drawings

- 2: Angular speed sensor
- 4: Oscillator
- 6: Driving circuit (driving section)
- 8: Sensing circuit (sensing section)
- 10: Power supply circuit (power supply section)
- 12: Return circuit (return section)
- 14: Silicon substrate
- 16 and 62: Driving electrode
- 18 and 64: Sensing electrode
- 20, 40, and 70: Digital camera
- 22 and 48: Battery
- 24: External signal
- 26: Output signal
- 32: Input section
- 34: Output section
- 42: Optical system
- 44: Inertia force sensor
- 46: Screw hole
- 50 and 80: Power supply section
- 52: Shutter button
- 54: Sensor element (oscillator)
- 56: Driving control section (driving section)
- 58: Detection signal processing section (sensing section)
- 60: Vibrating section
- 66: Around-detection-axis direction
- 72: Built-in timer
- 74: Resume signal (external signal)
- 92: Contact signal (external signal)
- 94: Timekeeping signal

### DETAILED DESCRIPTION OF PREFERRED EMBODIMENTS

Hereinafter, embodiments of the present invention will be described with reference to the drawings.

### (First embodiment)

First, a vibration-type inertia force sensor in the first embodiment of the present invention will be described. In the first embodiment, an angular speed sensor will be described as the vibration-type inertia force sensor.

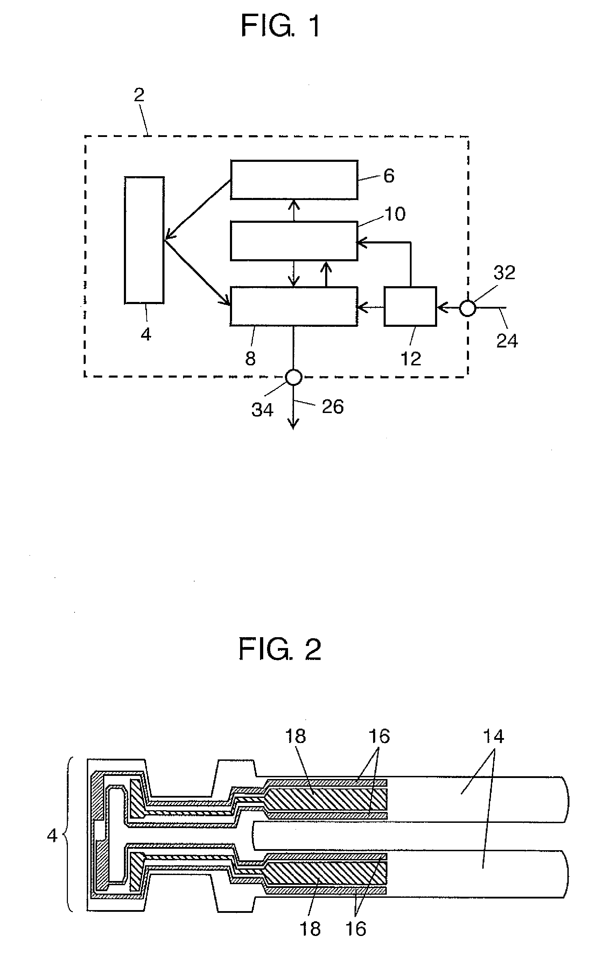

Fig. 1 is a block diagram illustrating the structure of angular speed sensor 2 in the first embodiment of the present invention. Fig. 2 is a top view illustrating the structure of oscillator 4 of angular speed sensor 2.

First, angular speed sensor 2 in Fig. 1 includes: oscillator 4 having a structure which will be described later; driving circuit 6 that is a driving section for oscillating oscillator 4; sensing circuit 8 that is a sensing section for sensing the strain caused in oscillator 4 due to the Coriolis force (inertia force); and power supply circuit 10 that is a power supply section for supplying power to driving circuit 6 and sensing circuit 8 in a normal state.

Sensing circuit 8 also has a function to determine, when oscillator 4 does not receive the Coriolis force for a predetermined time, that angular speed sensor 2 does not operate to instruct power supply circuit 10 to validate a sleep function (specifically, a function for causing a shift from the normal state to a power-saving state).

When power supply circuit 10 is instructed by sensing circuit 8 to validate the sleep function, a shift from the normal state to the power-saving state is caused. In the power-saving state, power is supplied to driving circuit 6 and no power is supplied to sensing circuit 8.

When a signal for cancelling the sleep function (i.e., for returning to the normal state from the power-saving state) from outside is inputted as external signal 24 through input section 32, external signal 24 is received by return circuit 12. Then, return circuit 12 instructs power supply circuit 10 to cancel the sleep function and causes sensing circuit 8 to resume the sensing of the strain of oscillator 4. When power supply circuit 10 is instructed by return circuit 12 to cancel the sleep function, power supply circuit 10 continues to supply power to the driving circuit 6 and resumes the power supply to sensing circuit 8. As a result, sensing circuit 8 resumes the sensing of the strain of oscillator 4.

As shown in Fig. 2, oscillator 4 is structured so that driving electrodes 16 and sensing electrodes 18 having a multilayer structure formed by sandwiching a piezoelectric thin film having PZT by an electrode having a metallic conductor such as Ag or Au are placed on silicon substrate 14 having a tuning fork-like shape, a H-like shape, a T-like shape, or other various shapes.

Returning to Fig. 1, driving circuit 6 is a circuit that controls a driving voltage applied to driving electrode 16 so that oscillator 4 is oscillated with a fixed amplitude and that has AGC and an amplifier.

Sensing circuit 8 is a circuit that processes a sensing signal electrically outputted from sensing electrode 18 due to the strain of oscillator 4 caused by the generation of Coriolis force and that is composed of an operation circuit, an integration circuit, and an IC. The result of the computation by sensing circuit 8 is sent as output signal 26 through output section 34 to outside.

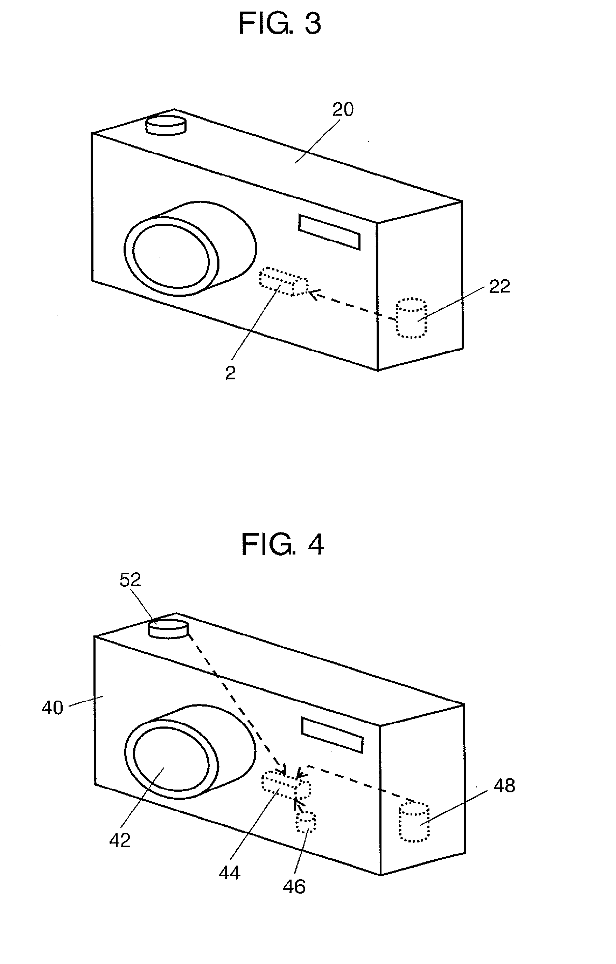

Angular speed sensor 2 as described above is installed as a component that realizes the image stabilizer function of digital camera 20 as shown in Fig. 3 for example. Digital camera 20 is driven by battery 22. Battery 22 supplies power to power supply circuit 10 of angular speed sensor 2. Thus, an increased power consumed by battery 22 reduces the time during which digital camera 20 can be used. To solve this, digital camera 20 uses the sleep function by which the minimum power supply to main functions is set when the camera is not used and power supply to other additional functions is blocked so that the power consumption of battery 22 can be saved and battery 22 can be used for a long time.

In speed sensor 2 as described above, when the Coriolis force is not received (in the power-saving state), no power is supplied to sensing circuit 8 that senses the strain caused in oscillator 4 due to the Coriolis force. Thus, power consumption can be reduced. The use of angular speed sensor 2 as described above in digital camera 20 can save the power consumption of battery 22 of digital camera 20.

Sensing circuit 8 may instruct power supply circuit 10 to validate the sleep function immediately after when oscillator 4 does not receive the Coriolis force or when a fixed length of time has passed since the last receipt of the Coriolis force by oscillator 4. Thus, sensing circuit 8 may instruct power supply circuit 10 to validate the sleep function at any timing in accordance with a specification.

In angular speed sensor 2, when oscillator 4 does not receive the Coriolis force (in the power-saving state), no power is supplied to sensing circuit 8 but power is supplied to driving circuit 6. This allows angular speed sensor 2 to have a shorter return time required to resume the function of angular speed sensor 2 to sense the strain of oscillator 4 when the normal state is returned from the power-saving state.

When the power to driving circuit 6 for oscillating oscillator 4 is blocked to subsequently resume the power supply to driving circuit 6 for example, oscillator 4 stopping the oscillation due to the blocked power requires a certain length of time to stabilize the oscillation after receiving power after the power blockage. Thus, the strain cannot be sensed accurately until the oscillation of oscillator 4 is stabilized. However, oscillator 4 can be always oscillated in a stable manner if the power to driving circuit 6 for oscillating oscillator 4 is not blocked and is continuously supplied as in angular speed sensor 2 in the first embodiment. As a result, angular speed sensor 2 requires no time to recover the function for sensing the strain of oscillator 4. On the other hand, when the normal state is returned from the power-saving state, sensing circuit 8 can recover the function with a relatively short time. Thus, during the power-saving state, no power is desirably supplied to sensing circuit 8 from the viewpoint of the saving of power consumption.

Furthermore, angular speed sensor 2 includes return circuit 12 for returning from the power-saving state to the normal state and thus the normal state can be smoothly returned from the power-saving state. External signal 24 for promoting the return is sent from digital camera 20 in which angular speed sensor 2 is installed. Various buttons such as a shutter button and a setting button of digital camera 20 can be used as a transmission switch of external signal 24. Power supply circuit 10 may be shifted from the power-saving state to the normal state as soon as external signal 24 is inputted. Alternatively, power supply circuit also may be shifted from the power-saving state to the normal state when external signal 24 is continuously or intermittently inputted for a fixed length of time. When power supply circuit 10 is shifted from the power-saving to state to the normal state as soon as external signal 24 is inputted, the normal state can be promptly returned. When power supply circuit 10 is shifted from the power-saving state to the normal state when external signal 24 is inputted for a predetermined time, a possibility can be reduced where a user accidentally touches some buttons for example to cause a shift from the power-saving to state to the normal state.

Although the first embodiment has been described with an example where, when the sleep function is validated, the power supply from power supply circuit 10 to driving circuit 6 is continued and the power supply from power supply circuit 10 to sensing circuit 8 is blocked, the present invention is not limited to this example. An opposite configuration also may be used, for example, where, when the sleep function is validated, the power supply from power supply circuit 10 to sensing circuit 8 is continued and the power supply from power supply circuit 10 to driving circuit 6 is blocked. In this case, the recovery of the function of angular speed sensor 2 due to the return from the power-saving state to the normal state requires a time but the reduction of the power consumption is possible.

Although the first embodiment has been described with angular speed sensor 2 as the vibration-type inertia force sensor, the present invention is not limited to this configuration. For example, angular speed sensor 2 may be any sensor such as acceleration sensor having oscillator 4 that senses the inertia force based on the oscillation of oscillator 4.

Although the first embodiment has been described with digital camera 20 as an electronic device, the present invention is not limited to this configuration. For example, angular speed sensor 2 of the first embodiment also can be installed in any electronic device in which the vibration-type inertia force sensor such as a camcorder can be installed.

### (Second embodiment)

Next, an electronic device of the second embodiment of the present invention will be described in detail. In the second embodiment, digital camera 40 will be described as an example of the electronic device.

Fig. 4 is a schematic view illustrating digital camera 40 in the second embodiment of the present invention. Digital camera 40 has a characteristic structure in which a device body has an image stabilizer function to optical system 42 having a lens and CCD. As a part of a system configuration realizing this image stabilizer function, vibration-type inertia force sensor 44 is attached to digital camera 40. Based on a detection signal from inertia force sensor 44, optical system 42 can be controlled to provide image stabilization in digital camera 40.

Digital camera 40 is driven by battery 48 for which the suppression of the power consumption is important. Thus, the sleep function is used by which the minimum power supply to the main functions is set when digital camera 40 is not used and the power supply to other additional functions is blocked.

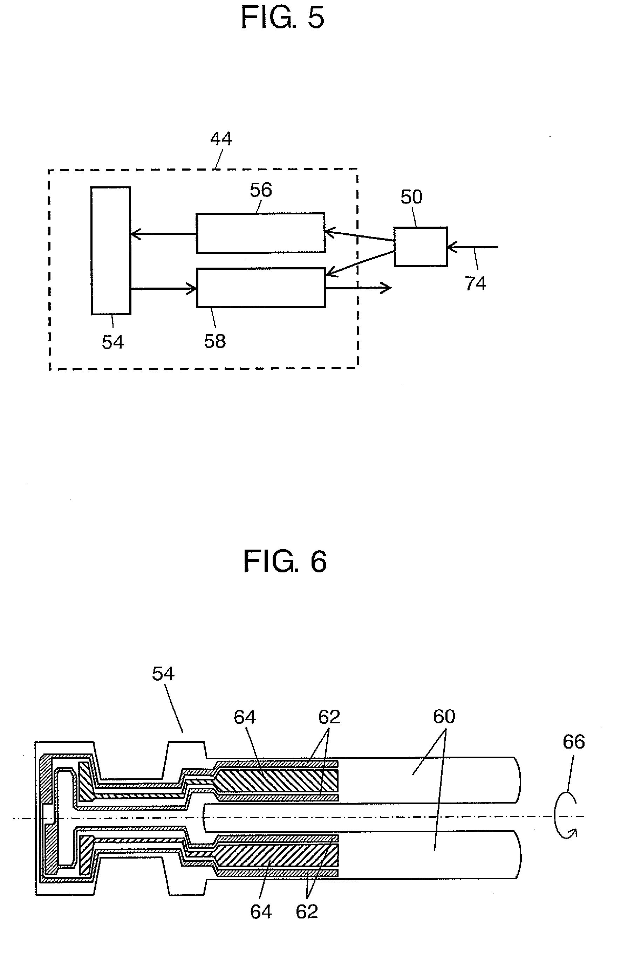

Fig. 5 is a block diagram illustrating the structure of the inertia force sensor used in the electronic device in the second embodiment. Inertia force sensor 44 used in digital camera 40 is an angular speed sensor that includes, as shown in Fig. 5, sensor element 54 that is an oscillator, driving control section 56 that is a driving section for vibrating sensor element 54, and detection signal processing section 58 that is a sensing section for sensing the strain of sensor element 54 when sensor element 54 receives the Coriolis force.

Fig. 6 is a top view illustrating a sensor element used in the inertia force sensor in the second embodiment. As shown in Fig. 6, sensor element 54 is structured so that a pair of driving electrode 62 and sensing electrode 64 is placed on each of a pair of vibrating sections 60 obtained by machining silicon substrate to have a tuning fork-like shape. The driving voltage is applied to driving electrode 62 to vibrate the pair of vibrating sections 60 in a direction along which vibrating sections 60 are provided in parallel to each other. When sensor element 54 receives an angular speed in around-detection-axis direction 66 in this state, the Coriolis force causes vibrating section 60 to deflect. This deflection of vibrating section 60 causes a charge in sensing electrode 64. As a result, this detection signal can be outputted to detection signal processing section 58.

Although the structure of driving electrode 62 and sensing electrode 64 provided in vibration-type inertia force sensor 44 is not particularly shown, driving electrode 62 and sensing electrode 64 have a multilayer structure in which an upper face and a lower face of a piezoelectric thin film having PZT are sandwiched by an electrode having a metallic conductor such as Ag or Au.

As shown in Fig. 5, driving control section 56 controls the driving voltage applied to driving electrode 62 so that vibrating section 60 in sensor element 54 vibrates with a fixed amplitude. Although not particularly shown, driving control section 56 is composed of an AGC and an amplifier.

Detection signal processing section 58 electrically processes a detection signal outputted from sensing electrode 64 of sensor element 54. Detection signal processing section 58 has a differential circuit, an integration circuit, and an IC.

Digital camera 40 also includes power supply section 50 that supplies power to at least any of driving control section 56 and detection signal processing section 58.

Inertia force sensor 44 having the structure as described above cannot provide an accurate detection result without a stable amplitude of sensor element 54 shown in Fig. 6. Thus, when the operation of inertia force sensor 44 is entirely stopped by the above-described sleep function, the vibrating state of sensor element 54 must be stabilized when the function of sensor element 54 is recovered, thus requiring a long time for the digital camera to resume.

To solve this, in digital camera 40 in the second embodiment, even when the sleep function is being provided (i.e., even in the power-saving state), power supply section 50 can supply power to at least a part of inertia force sensor 44 (e.g., any of driving control section 56 and detection signal processing section 58) to allow digital camera 40 to resume with a shorter time.

With regards to a part of inertia force sensor 44 to which power is supplied when the sleep function is being provided (i.e., in the power-saving state), it is effective to continuously supply power to driving control section 56 that controls sensor element 54 and to stop the power supply to detection signal processing section 58. The reason is that processing section 58 requires a relatively short time to resume and a time required for digital camera 40 to resume is significantly influenced by a time required to stabilize the amplitude of sensor element 54.

However, when the power supply from power supply section 50 to detection signal processing section 58 of inertia force sensor 44 is stopped, inertia force sensor 44 cannot generate resume signal 74 that is an external signal as a trigger of the return to the normal state from the power-saving state. Thus, resume signal 74 must be generated by another part of the electronic device and must be transmitted to power supply section 50.

For example, in the case of digital camera 40 shown in Fig. 4, resume signal 74 can be generated based on information caused when a user places his or her finger on shutter button 52, information caused when the contact of the user's hand with the device body is sensed, or information caused when a screw of a tripod is attached to screw hole 46 of the device body (i.e., information caused by the contact of the user with the device body of digital camera 40 or the operation of digital camera 40 by the user).

Although the second embodiment has been described by way of a digital camera as an electronic device and an angular speed sensor as inertia force sensor 44, the present invention is not limited to these examples. For example, the present invention also can be used for a battery-driven electronic device such as a digital camcorder or a camera mobile phone including therein a vibration-type inertia force sensor for sensing an inertia force such as an angular speed or acceleration.

### (Third embodiment)

Next, an electronic device in the third embodiment of the present invention will be described in detail with reference to the drawings. The third embodiment will be also described by way of a digital camera as an example of an electronic device.

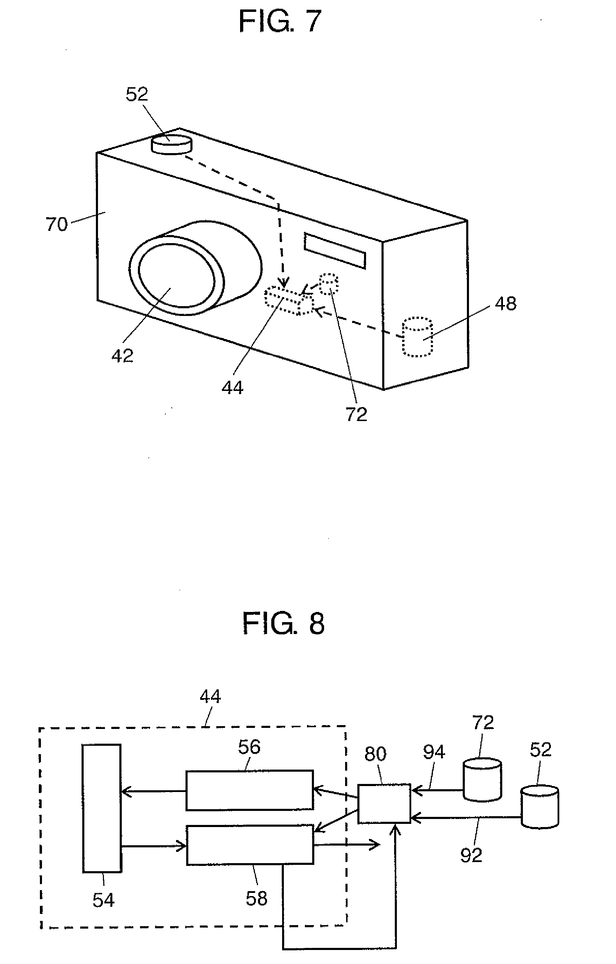

Fig. 7 is a schematic view illustrating digital camera 70 in the third embodiment of the present invention. Fig. 8 is a block diagram illustrating the structure of an inertia force sensor used in the electronic device.

Digital camera 70 has an image stabilizer function as a characteristic structure to optical system 42 having a lens and a CCD provided in the device body. As a part of a system configuration realizing the image stabilizer function, vibration-type inertia force sensor 44 as an angular speed sensor is attached to digital camera 70. Based on a detection signal from inertia force sensor 44, an unstable image due to the jiggling of hands holding the digital camera can be prevented.

Inertia force sensor 44 used in digital camera 70 has the same structure as that of inertia force sensor 44 installed in digital camera 40 described in the second embodiment and thus will not be described further.

Digital camera 70 is driven by battery 48 for which the suppression of the power consumption is important. Thus, digital camera 70 also uses the sleep function by which the minimum power supply to the main functions is set when digital camera 70 is not used and the power supply to other additional functions is blocked.

As shown in Fig. 7 and Fig. 8, digital camera 70 further includes built-in timer 72. Timekeeping signal 94 showing the time information measured by built-in timer 72 and contact signal 92 as an external signal caused by the contact of a user with the device such as shutter button 52 are inputted to power supply section 80. Strain detection information from detection signal processing section 58 is also inputted to power supply section 80. Based on these inputs, power supply section 80 supplies power to any of driving control section 56 and detection signal processing section 58. The manner in which power supply section 80 supplies power in the normal state and the power-saving state is the same as that of power supply section 50 in the second embodiment and thus will not be described further.

By the configuration as described above, a so-called timer sleep function can be used in digital camera 70. The timer sleep function provides the shift from the normal state to the power-saving state and the shift from the power-saving state to the normal state based on contact signal 92 by the user as described above and timekeeping signal 94 from built-in timer 72 provided in digital camera 70. The configuration as described above also can provide the use of an angular speed sleep function based on angular speed information outputted to the device body from inertia force sensor 44 for correcting the hand jiggling.

First, in the timer sleep function, the shift from the normal state to the power-saving state is performed when a fixed time (which is determined by the timekeeping by built-in timer 72) has passed since the last contact of the user with the device (specifically, since the last-sensed contact signal 92). By carrying out an immediate shift from the normal state to the power-saving state just after the last-contact of the user with the device (specifically, the last-sensed contact signal 92), more power saving can be achieved. Alternatively, by carrying out the shift from the normal state to the power-saving state since a predetermined time has passed since the last-sensed contact signal 92, a possibility also can be reduced where the shift to the power-saving state is caused against an intention of the user still using the device.

The shift from the power-saving state to the normal state is performed when the user contacts the device (specifically, when contact signal 92 is sensed by power supply section 80). Power supply section 80 may be shifted from the power-saving state to the normal state as soon as contact signal 92 is inputted or also may be shifted from the power-saving state to the normal state when contact signal 92 is continuously or intermittently inputted for a fixed length of time. When power supply section 80 is shifted from the power-saving state to the normal state as soon as contact signal 92 is inputted, the shift to the normal state can be achieved promptly. When power supply section 80 is shifted from the power-saving state to the normal state when contact signal 92 is inputted for a predetermined time, a possibility can be reduced where the shift to the normal state is caused when the user mistakenly depresses some buttons.

Next, in the angular speed sleep function, the shift from the normal state to the power-saving state is performed when power supply section 80 determines that the device is not operated by the user for a fixed length of time based on an output from detection signal processing section 58. By carrying out an immediate shift from the normal state to the power-saving state just after the last contact of the user with the device, more power saving can be achieved. Alternatively, by carrying out the shift from the normal state to the power-saving state since a predetermined time has passed since the determination that the user does not operate the device, a possibility also can be reduced where the shift to the power-saving state is caused against an intention of the user still using the device.

In other words, since digital camera 70 in the third embodiment includes inertia force sensor 44 provided in the device body, an output signal from inertia force sensor 44 is outputted on a real-time basis in accordance with the behavior of the device body. By using this output signal not only for the image stabilizer function but also for information for stating the sleep function to provide the shift of the electronic device from the normal state to the power-saving state, the behavior of the device body can be determined more accurately than a case where only the timer sleep function is used, thus achieving more power saving of the electronic device. For example, when only the timer sleep function is used, the digital camera is in the normal state for a fixed length of time even when the user lefts the digital camera on a desk. However, the use the angular speed sleep function can provide, on a real-time basis, the determination that the digital camera is placed on the desk, thus validating the sleep function at a sooner time.

Although the third embodiment has been described with a digital camera as an electronic device, the present invention is not limited to this. The present invention also can be used for a battery-driven electronic device such as a digital camcorder or a camera mobile phone including therein a vibration-type inertia force sensor such as an angular speed sensor.

### INDUSTRIAL APPLICABILITY

As described above, the present invention can realize a vibration-type inertia force sensor that can reduce power consumption when being installed in an electronic device such as a digital camera. Thus, the present invention is advantageously used for a vibration-type inertia force sensor used in various electronic devices and an electronic device using the same for example.

## Claims

1. A vibration-type inertia force sensor comprising:
an oscillator;
a driving section for oscillating the oscillator;
a sensing section for sensing a strain caused in the oscillator due to an inertia force; and
a power supply section for supplying power to the driving section and the sensing section in a normal state and for supplying power to one of the driving section and the sensing section and not supplying power to the other of the driving section and the sensing section in a power-saving state.

2. The vibration-type inertia force sensor according to claim 1, wherein:
the power supply section supplies power to the driving section and does not supply power to the sensing section in the power-saving state.

3. The vibration-type inertia force sensor according to claim 2, wherein:
the vibration-type inertia force sensor includes a return section for returning the power supply section from the power-saving state to the normal state.

4. The vibration-type inertia force sensor according to claim 3, wherein:
the return section returns the power supply section from the power-saving state to the normal state when there is an input of an external signal.

5. The vibration-type inertia force sensor according to claim 2, wherein:
when the sensing section does not sense the strain, the power supply section is shifted from the normal state to the power-saving state.

6. The vibration-type inertia force sensor according to claim 5, wherein:
when the sensing section does not sense the strain for a predetermined time, the power supply section is shifted from the normal state to the power-saving state.

7. An electronic device comprising the vibration-type inertia force sensor according to any of claims 1 to 6.

8. An electronic device comprising:
a vibration-type inertia force sensor having an oscillator, a driving section for oscillating the oscillator, and a sensing section for sensing a strain caused in the oscillator due to an inertia force; and
a power supply section for supplying power to the driving section and the sensing section in a normal state and for supplying power to one of the driving section and the sensing section and not supplying power to the other of the driving section and the sensing section in a power-saving state.

9. The vibration-type inertia force sensor according to claim 8, wherein:
the power supply section supplies power to the driving section and does not supply power to the sensing section in the power-saving state.

10. The vibration-type inertia force sensor according to claim 9, wherein:
when an external signal is inputted, the power supply section is shifted from the power-saving state to the normal state.

11. The vibration-type inertia force sensor according to claim 10, wherein:
the external signal is a signal caused when a user contacts the electronic device.

12. The vibration-type inertia force sensor according to claim 9, wherein:
when the sensing section does not sense the strain, the power supply section is shifted from the normal state to the power-saving state.

13. The vibration-type inertia force sensor according to claim 9, wherein:
when the sensing section does not sense the strain for a predetermined time, the power supply section is shifted from the normal state to the power-saving state.

14. The vibration-type inertia force sensor according to claim 9, wherein:
the power supply section is shifted from the normal state to the power-saving state when there is no input of an external signal for a predetermined time.

15. The vibration-type inertia force sensor according to claim 14, wherein:
the external signal is a signal caused when a user contacts the electronic device.
